# EUROPEAN PATENT SPECIFICATION

(11) **EP 0 776 294 B1**
(45) Date of publication and mention of the grant of the patent: **19.01.2000**
(21) Application number: 96918911.7
(22) Date of filing: 19.06.1996
(51) Int. Cl.: B62M 3/00

(54) **CRANK-RODS OF A BICYCLE**
FAHRRADTRETKURBEL
MANIVELLE DE BICYCLETTE

(30) Priority: 06.07.1995 KR 1652095; 15.05.1996 KR 1618396
(43) Date of publication of application: 04.06.1997
(73) Proprietor: Jo, Sang Yeon, Koyang-si, Kyunggi-do 411-020 (KR)
(72) Inventor: Jo, Sang Yeon, Koyang-si, Kyunggi-do 411-020 (KR)
(74) Representative: Sama, Daniele, Dr.
(86) International application number: KR9600093
(87) International publication number: WO9702174

(56) References cited:
- AU-A- 4 475 289
- FR-A- 2 416 829
- FR-A- 2 566 361
- FR-A- 2 649 065
- GB-A- 189 819 031

## Description

### TECHNICAL FIELD

The present invention relates to crank-rods for driving a sprocket wheel of a bicycle according to the preamble of claim 1, more particularly, the crank-rods for a rider to apply a powerful driving force to the sprocket wheel in a comfortable position by appropriately combining attribute of engineering of the human body with inertia force of the bicycle in a running state.

### BACKGROUND ART

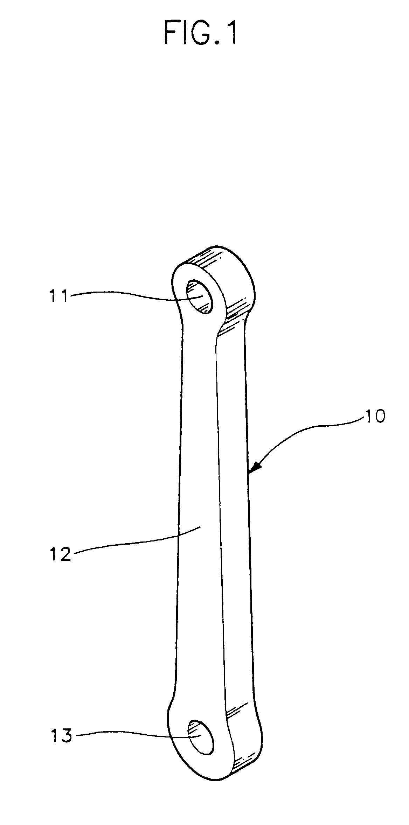

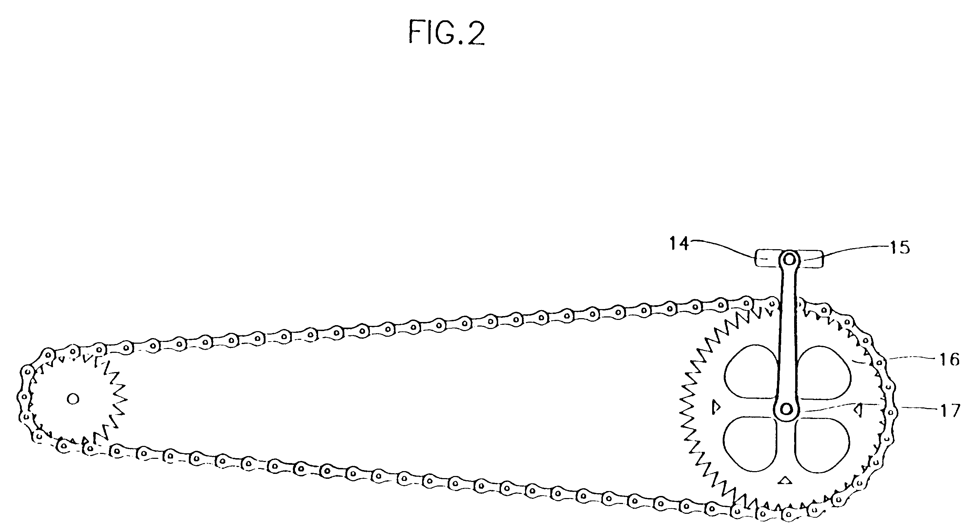

As shown in Fig. 1, a conventional crank-rod 10 comprises a pedal-shaft fixing hole 11 at one end, a crank-shaft fixing hole 13 at the other end and a transmitting member 12 between the pedal-shaft fixing hole 11 and the crank-shaft fixing hole 13 which is a linearly extending steel beam. The transmitting member 12 has a rectangular cross section being gradually enlarged as moving toward the crank-shaft fixing hole 13. As shown in Fig. 2, the crank-rod 10 is assembled into the bicycle by inserting and fixing a crank-shaft 17 fixed on the center of a sprocket wheel 16 into the crank-shaft fixing hole 13, while a pedal-shaft 15 is inserted into the pedal-shaft fixing hole 11.

When running a bicycle (not shown), a pushing force by a rider's foot is applied against the pedal 14 as a linear force and such a linear force is converted by the crank-rod 10 into a rotary force against the sprocket wheel 16 and then transmitted through a chain to another sprocket wheel fixed on the hub (not shown) of the rear wheel of the bicycle.

On one hand, when a rider straddling a bicycle saddle steps on the pedal 14 in a state of straightly spreading out his leg so that the upper and lower parts of his body form a straight line, the rider can apply the most powerful pushing force by a foot against the pedal 14 in the most comfortable position. That is, it is easy and effective for the rider to apply the pushing force in the same direction as the direction of the upper part of his body. Futhermore, since the bicycle saddle has no means such as the back of a chair for supporting the rider's body, it is difficult for the rider to overcome the counter-force from the pedal 14 on which he is stepping. The rider's weight applied in the direction of gravity is the only force for withstanding the counter-force from the pedal 14. Therefore, the direction for the rider to easily and effectively apply the pushing force against the pedal 14 is the vertical direction which corresponds not only with the direction of the upper part of the rider's body but also with the direction of gravity.

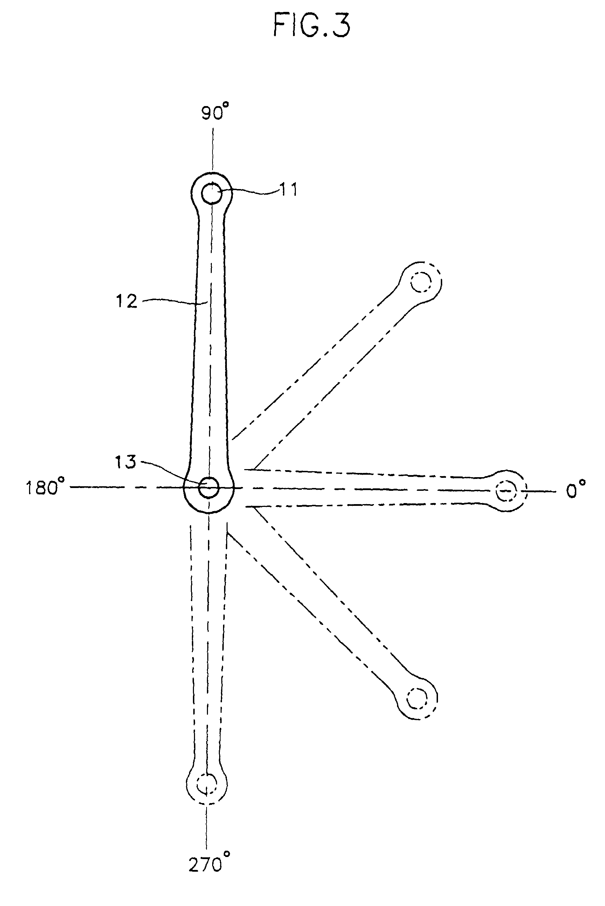

On the other hand, only the time when the pedal 14 is positioned on the right portion in Fig. 3, i.e., while the pedal 14 being clockwise rotating from the position of 90° to the position of 270°, the pushing force against the pedal 14 is effectively converted to the rotary force for rotating the sprocket wheel 16 and the rear wheel of the bicycle so as to advance the bicycle. If the pushing force against the pedal 14 is constant at any position, the rotary force is changed in a form of a cosine curve which becomes 0 (zero) at the positions of 90° and 270° and takes the maximum value at the position of 0° . That is, while the pedal 14 being moving from the position of 90° to the position of 0° , a force for accelerating the rotary speed of the sprocket wheel 16 and, subsequently, of the rear wheel of the bicycle is increased and, while the pedal 14 being moving from the position of 0° to the position of 270° , such an accelerating force is decreased.

As soon as the pedal 14 passes through the position of 90° , the rider accelerates the bicycle by forcefully stepping on the pedal 14. While the pedal 14 rotating from the position of 315° to position of 270° where the accelerating force has been decreased to become substantially zero, however, only an inertia force is applied against the pedal 14, since the rider generally does not apply a force against the pedal 14.

Futhermore, as to the conventional crank-rod 10 as above mentioned, only at the time when the pedal 14 is clockwise rotating from the position of 45° to the position of 315°, the pushing force against the pedal 14 is converted into the accelerating force in a relatively high efficiency, but, at the other time such as while the pedal 14 being clockwise rotating from the position of 90° to the position of 45°, although the rider may forcefully step on the pedal 14, the accelerating force in not very increased.

GB-A-19 031 A.D. 1898 discloses a driving crank for bicycles consisting of a straight portion A at the end of which is the pedal spindle and of a coiled portion B extending for about three quarters of a circle around the crank spindle. The coiled portion B improves the resiliency of the crank but the straight portion A lacks flexibility for bending.

### DISCLOSURE OF INVENTION

Considering the aformentioned problems, the present invention intends to provide such a crank-rod that, although a pedal is positioned between the position of 90° and the position of 45° where a rider can very forcefully step on the pedal in a very comfortable position, a pushing force against the pedal stepped on by the rider can be more effectively converted to a rotary force against a sprocket wheel and, subsequently, a rear wheel of a bicycle so that the rider runs the bicycle easily and quickly.

According to the invention, there is provided a crank-rod for a bicycle according to claim 1.

Futhermore, the offset angle may have a degree between 3 ° and 54° . It is preferable that in the region of the root of said second portion of the transmitting member, i.e., said crank-shaft fixing hole of said crank-rod, a slit for promoting and a projection for limiting deformation of said second portion of said transmitting member are formed.

### BRIEF DESCRIPTION OF DRAWINGS

Fig. 1 shows a perspective view of a conventional crank-rod of a bicycle:
Fig. 2 shows an elevational view for a portion of a transmission of a bicycle along with the crank-rod shown in Fig. 1 which has been assembled therein;
Fig. 3 shows, for illustrating operation of the crank-rod shown in Fig. 1, an elevational view of the crank-rod on two-dimensional coordinates which have the origin corresponding with the center of the crank-shaft fixing hole of the crank-rod;
Fig. 4 shows a perspective view of a first embodiment of a crank-rod of a bicycle according to the present invention.
Fig. 5 shows an elevational view of a portion of a transmission of a bicycle along with the crank-rod shown in Fig. 4 which has been assembled therein;
Fig. 6 shows, for illustrating operation of the crank-rod shown in Fig. 4, an elevational view of the crank-rod on two-dimensional coordinates which have the origin corresponding with the center of the crank-shaft fixing hole of the crank-rod;
Fig. 7 shows, a perspective view of a second embodiment of a crank-rod of a bicycle according to the present invention, and;
Fig. 8 shows, for illustrating operation of the crank-rod shown in Fig. 7, an elevational view of the crank-rod on two-dimensional coordinates which have the origin corresponding with the center of the crank-shaft fixing hole of the crank-rod.

### BEST MODE FOR CARRYING OUT THE INVENTION

Now, considering the attached drawings, the preferred embodiments of the crank-rod according to the invention will be detailedly described.

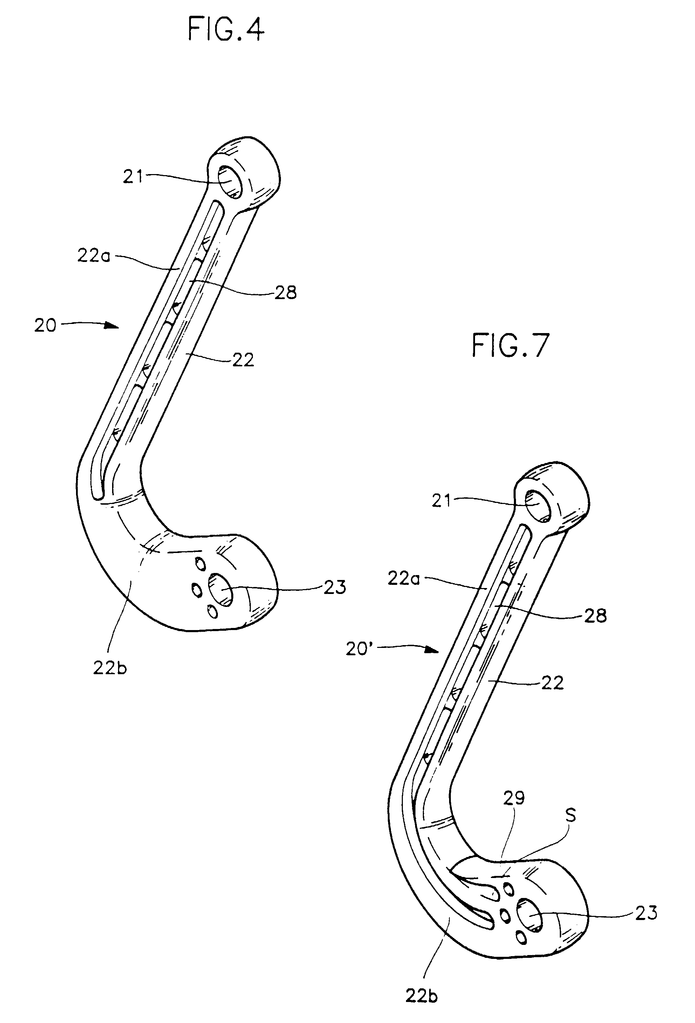

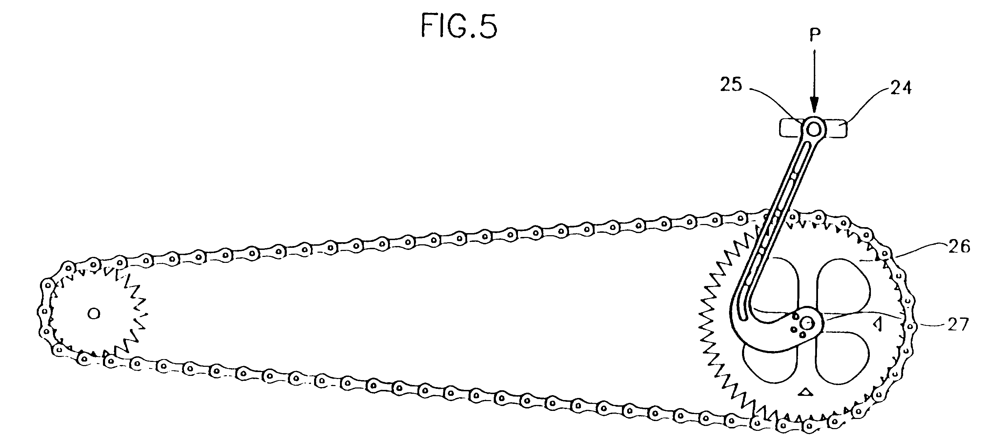

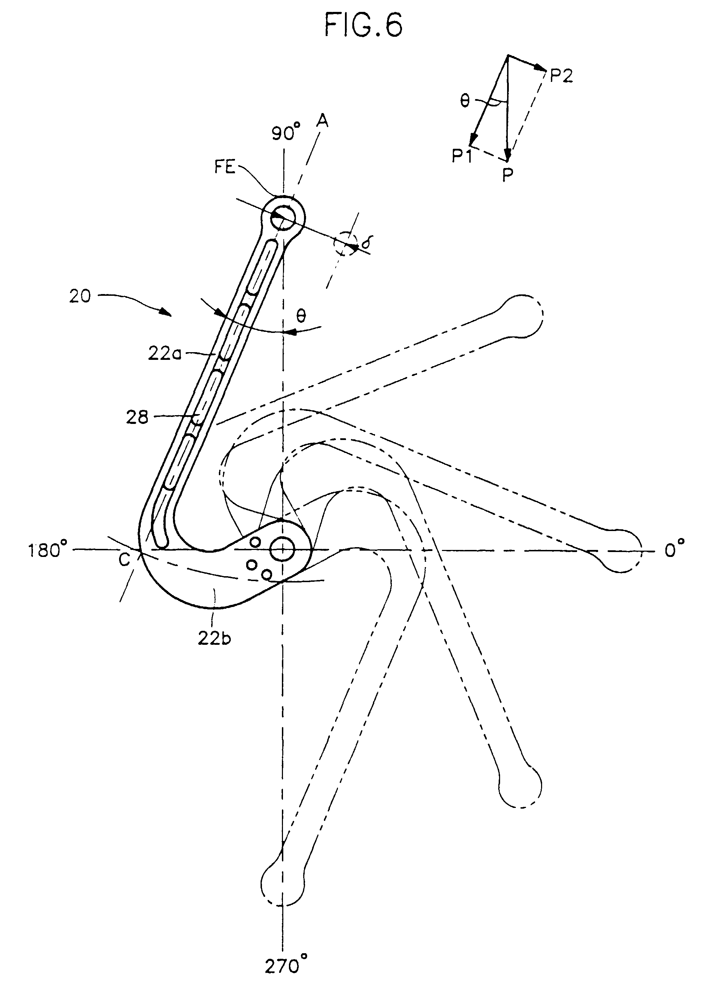

Fig. 4 shows a perspective view of a first embodiment of a crank rod of a bicycle according to the present invention. Fig. 5 shows an elevational view of a portion of a transmission of a bicycle along with the crank-rod shown in Fig. 4 which has been assembled therein, and, Fig. 6 shows, for illustrating operation of the crank-rod shown in Fig. 4, an elevational view of the crank-rod on two-dimensional coordinates which have the origin corresponding with the center of the crank-shaft fixing hole of the crank-rod. In Fig. 4 to Fig. 6, reference numeral 20 is designated to a crank-rod according to the first embodiment of the invention in general, reference numeral 21 is designated to a pedal-shaft fixing hole to be inserted and fixed around a shaft 25 of a pedal 24 of the bicycle, reference numeral 22 is designated to a transmitting member, and, reference numeral 23 is designated to a crank shaft fixing hole to be inserted and fixed around a crank shaft 27 in a state of fixation on the center of the sprocket wheel 26.

As shown in Fig. 4, the transmitting member 22 of the crank rod 20 of the bicycle according to the first embodiment of the invention consists of a first portion 22a constituting a main portion of the transmitting member 22 and a second portion 22b operating as an arm for offsetting a longitudinal axis A of the first portion 22a by an offset angle θ from a straight line passing through the center of the pedal-shaft fixing hole 21 and the center of the crank-shaft fixing hole 23, wherein the first portion 22a of the transmitting member 22 is deformed to bend by maximum amount within an extent which does not exceed an elastic limit by a force applied during running the bicycle against the free end FE of the first portion 22a of the transmitting member 22 in a direction perpendicular to that of the first portion 22a of the transmitting member 22 and parallel with the second portion 22b of the transmitting member 22, and, wherein the first portion 22a of the transmitting member 22 is a substantially straight beam member having a even shaped and sized cross section, while the second portion 22b of the transmitting member 22 is an arched metal member corresponding a portion of a circle concaved at the side faced the pedal shaft fixing hole 21. Here, the second portion 22b is positioned and arched under the horizontal line between the crank-shaft 27 and the connecting point C connecting the first portion 22a and the second portion 22b of the transmitting member 22, at a position that the pedal-shaft fixing hole 21 is positioned upwards from the crank-shaft fixing hole 23 and perpendicularly to the horizontal line. Further explanation will be described with the explanation of Fig. 6. Futhermore, the first portion 22a of the transmitting member 22 have a plurality of longitudinally spaced slots 28 pierced in depth direction so as to enhance flexibility for bending. It is preferable that the offset angle θ has a degree between 3° and 54° .

More preferably, a transition in a region of a connection point C between the first portion 22a and the second portion 22b of the transmitting member 22 may be formed in a polygonal or roundish shape.

Now, considering Fig. 6, operation of the crank rod according to the first embodiment of the invention will be described.

When the pedal-shaft fixing hole 21 of the crank-rod 20 is positioned at the position of 90°, i.e., when the pedal 24 of the bicycle is positioned as shown in Fig. 5, a pushing force by a rider's foot against the pedal 14 is represented as a vertical force P. The vertical force P is equal to the vector sum of a first component P1 of the vertical force P along the longitudinal direction of the first portion 22a of the transmitting member 22 and a second component P2 of the vertical force P perpendicular to the longitudinal direction of the first portion 22a of the transmitting member 22. As illustrated in Fig 6, the second portion 22b is positioned under the horizontal line between the crank-shaft 27 and the connecting point C connecting the first portion 22a and the second portion 22b of the transmitting member 22, at a position that the pedal-shaft fixing hole 21 is positioned upwards from the crank-shaft fixing hole 23 and perpendicularly to the horizontal line. Accordingly, the second component P2 reaches a lower part of the crank shaft and thereby rotating the crank-shaft from the lower part. Therefore, it has an effect that the length of the transmitting member 22 is extended, and thereby providing a high rotation power. The second component P2 of the vertical force P can be considered as a concentrated load applied against a free end FE of the transmitting member 22. The concentrated load causes bending deformation resulting in falling δ of the free end FE of the transmitting member 22 or rightward displacement by a horizontal distance ℓ of the pedal-shaft fixing hole 21 on which the vertical force P is applied. Thus, at the moment, a rotary force against the sprocket wheel 26 become to have intensity of ℓ ·P. Therefore, at each moment while the crank rod 20 being clockwise rotated, the rotary force against the sprocket wheel 26 due to the falling δ is added to another rotary force which occurs in the sprocket wheel 26 in the state without the falling δ depending on the position of the crank rod 20 rotated on the coordinates. While the crank rod 20 moving from the position of 90° to 0°, the second component P2 of the vertical force P varies with P sinθ and, accordingly, an amount of the falling δ and the horizontal distance ℓ of the rightward displacement of the application point of the vertical force P vary. The horizontal distance ℓ of the rightward displacement of the pedal shaft fixing hole 21 is held in substantially constant while the crank rod 20 moving from the position of 90° to the position of 45° , and suddenly decreased after the crank rod 20 passes through the position of 45° . Therefore, when the crank rod 20 is positioned between the position of 90° and the position of 45° , efficiency of increasing the rotary force against the sprocket wheel is enlarged most of all.

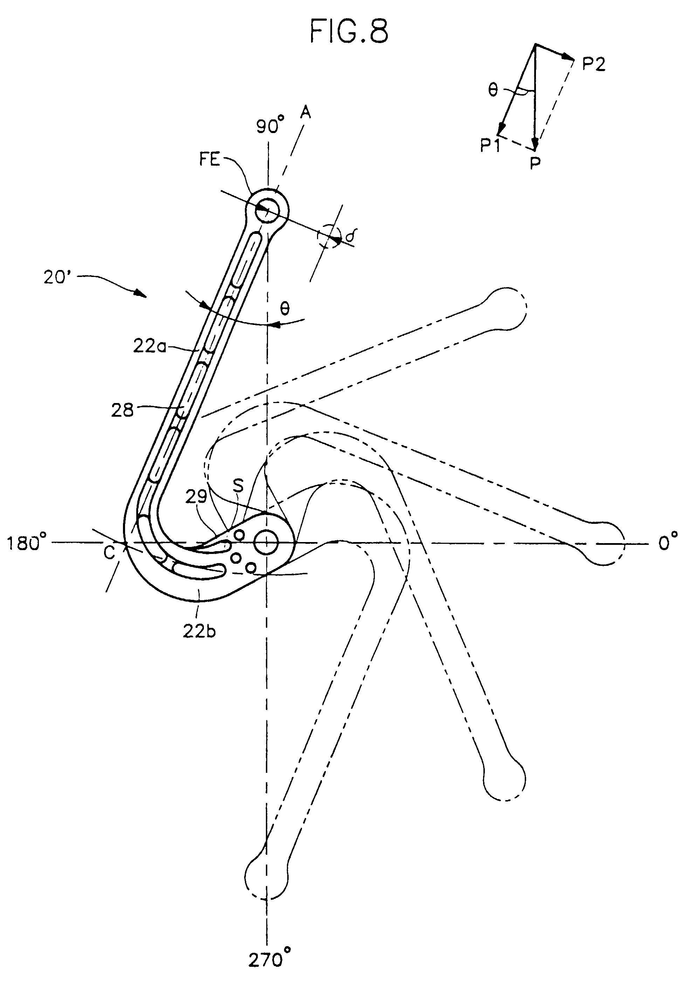

Now, considering Fig. 7 and Fig. 8, a second embodiment of the crank-rod according to the invention will be detailedly described.

The crank-rod 20' according to the second embodiment of the invention is similar to the crank-rod 20 according to the first embodiment of the invention, except for that the second portion 22b of the transmitting member 22 is deformed in the similar deforming manner to that of the first portion 22a of the transmitting member 22.

To increase the amount of the falling δ, it is preferable that a slit S for promoting deformation of the second portion 22b of the transmitting member 22 is formed in the region of the root of the second portion 22b of the transmitting member 22 or in the region of the crank-shaft fixing hole 23. In the case of forming the slit S, the second portion 22b of the transmitting member 22 may be deformed until the amount of the deformation exceeds an elastic limit so as to break the transmitting member 22. Accordingly, it is preferable to form a projection 29 for limiting deformation of said second portion 22b of said transmitting member 22 are formed.

Although, in aim to enhance flexibility of the transmitting member 22 against bending of the transmitting member 22, there are formed a plurality of longitudinally spaced slots 28 in the crank-rods 20 and 20' according to the first and second embodiments of the invention, as far as it is possible to provide a pertinent flexibility in the light of a material property, it is not necessary to form such a slot.

The crank-rod of the bicycle according to the invention increase efficiency of converting a rider's pushing force against the pedal of the bicycle into a rotary force against the sprocket wheel of the bicycle at the moment that the pedal of the bicycle reaches the highest point, i.e., when the rider straddling a bicycle saddle can step on the pedal very powerfully in the most comfortable position.
Futhermore, since the flexibility provided in the crank-rod of the bicycle according to the invention absorbs a shock applied to the rider's foot when stepping on the pedal, rider's fatigue felt during running the bicycle must be greatly relieved. That is, the bicycle having the crank-rod according to the invention makes the rider not only to run more rapidly, but also, after running, to feel less than a conventional crank-rod.

## Claims

1. A crank-rod (20) for a bicycle comprising a pedal-shaft fixing hole (21) at one end, a crank-shaft fixing hole (23) at the other end and a transmitting member (22) between said pedal-shaft fixing hole (21) and said crank-shaft fixing hole (23), in which upon assembling said crank-rod (20) into the bicycle, a crank-shaft (27) in a state of fixation on the center of a sprocket wheel (26) is inserted and fixed into said crank-shaft fixing hole (23) and a pedal-shaft (25) is inserted and fixed into said pedal-shaft fixing hole (21), said transmitting member (22) including a first portion (22a) and a second portion (22b) operating as an arm for offsetting a longitudinal axis (A) of said first portion (22a) by an offset angle (θ) from a straight line passing through the center of said pedal-shaft fixing hole (21) and the center of said crank-shaft fixing hole (23), characterized in that said second portion (22b) of said transmitting member (22) is positioned and arched under the horizontal line between the crank-shaft fixing hole (23) and the connecting point (C) connecting the first portion (22a) and the second portion (22b) of the transmitting member (22), at a position where the pedal-shaft fixing hole (21) is positioned vertically above the crank-shaft fixing hole (23), and
wherein said first portion (22a) of said transmitting member (22) has a plurality of longitudinally spaced slots (28) pierced in depth in a direction perpendicular to the plane defined by the first and second portion of the crank rod (20), so as to enhance flexibility of said first portion (22a) for bending in said plane.

2. A crank-rod (20) for a bicycle according to claim 1, characterized in that said second portion (22b) of said transmitting member (22) has same slots as the slots (28) pierced in said first portion (22a) of said transmitting member (22).

3. A crank-rod (20) for a bicycle according to any one of the claims 1-2, characterized in that said offset angle θ has a degree between 3° and 54°.

4. A crank-rod (20) for a bicycle according to any one of the claims 1-3, characterized in that in the region of the root of said second portion (22b) of said transmitting member (22), said root being in the portion located about said crank-shaft fixing hole (23) for said crank-rod (20), a slit (S) and a projection (29) for promoting and limiting deformation of said second portion (22b) of said transmitting member (22) is formed.

## Patentansprüche

1. Tretkurbel (20) für ein Fahrrad, umfassend ein Pedalwellen-Befestigungsloch (21) an einem Ende, ein Kurbelwellen-Befestigungsloch (23) an dem anderen Ende und ein Übertragungselement (22) zwischen dem Pedalwellen-Befestigungsloch (21) und dem Kurbelwellen-Befestigungsloch (23), bei der nach Montage der Tretkurbel (20) in das Fahrrad eine Kurbelwelle (27) in einem Befestigungszustand auf der Mitte eines Kettenrades (26) in das Kurbelwellen-Befestigungsloch (23) eingesetzt und befestigt ist, und eine Pedalwelle (25) in das Pedalwellen-Befestigungsloch (21) eingesetzt und befestigt ist,
wobei das Übertragungselement (22) umfaßt: einen ersten Teil (22a) und einen zweiten Teil (22b), der als Arm wirkt, um eine Längsachse (A) des ersten Teils (22a) um einen Versatzwinkel (θ) gegenüber einer Geraden zu versetzen, die durch die Mitte des Pedalwellen-Befestigungslochs (21) und die Mitte des Kurbelwellen-Befestigungslochs (23) hindurchgeht,
dadurch gekennzeichnet, daß in einer Stellung, in der das Pedalwellen-Befestigungsloch (21) vertikal über dem Kurbelwellen-Befestigungsloch (23) angeordnet ist, der zweite Teil (22b) des Übertragungselements (22) unter der horizontalen Linie zwischen dem Kurbelwellen-Befestigungsloch (23) und dem den ersten Teil (22a) und den zweiten Teil (22b) des Übertragungselements (22) verbindenden Verbindungspunkt (C) angeordnet und gebogen ist, und
wobei der erste Teil (22a) des Übertragungselements (22) eine Mehrzahl von in Längsrichtung im Abstand angeordneten Schlitzen (28) aufweist, die in einer Richtung, die senkrecht zu der Ebene ist, die durch den ersten und zweiten Teil der Tretkurbel (20) definiert wird, in der Tiefe durchlocht sind, um die Biegsamkeit des ersten Teils (22a) zum Durchbiegen in der Ebene zu erhöhen.

2. Tretkurbel (20) für ein Fahrrad nach Anspruch 1, dadurch gekennzeichnet, daß der zweite Teil (22b) des Übertragungselements (22) dieselben Schlitze aufweist, wie die Schlitze (28), die in dem ersten Teil (22a) des Übertragungselements (22) durchlocht sind.

3. Tretkurbel (20) für ein Fahrrad nach einem der Ansprüche 1 - 2, dadurch gekennzeichnet, daß der Versatzwinkel θ ein Maß zwischen 3° und 54° aufweist.

4. Kurbelwelle (20) für ein Fahrrad nach einem der Ansprüche 1 - 3, dadurch gekennzeichnet, daß im Bereich der Wurzel des zweiten Teils (22b) des Übertragungselements (22), wobei sich die Wurzel in dem Teil befindet, der um das Kurbelwellen-Befestigungsloch (23) für die Tretkurbel (20) herum angeordnet ist, ein Schlitz (S) und ein Vorsprung (29) ausgebildet sind, um eine Verformung des zweiten Teils (22b) des Übertragungselements (22) zu fördern und zu begrenzen.

## Revendications

1. Manivelle (20) pour une bicyclette comprenant un alésage (21) de fixation de l'axe de pédale à une extrémité, un alésage (23) de fixation de l'arbre de manivelle à l'autre extrémité et un élément de transmission (22) entre ledit alésage (21) de fixation de l'axe de pédale et ledit alésage (23) de fixation de l'arbre de manivelle, dans laquelle, lors de l'assemblage de ladite manivelle (20) dans la bicyclette, un arbre de manivelle (27) dans un état de fixation sur le centre d'une roue dentée (26) est introduit et fixé dans ledit alésage (23) de fixation de l'arbre de manivelle et un axe de pédale (25) est introduit et fixé dans ledit alésage (21) de fixation de l'axe de pédale,
ledit élément de transmission (22) comprenant une première partie (22a) et une seconde partie (22b) fonctionnant comme un bras pour décaler un axe longitudinal (A) de ladite première partie (22a) d'un angle de décalage (θ) par rapport à une ligne droite passant par le centre dudit alésage (21) de fixation de l'axe de pédale et le centre dudit alésage (23) de fixation de l'arbre de manivelle,
caractérisée par le fait que ladite seconde partie (22b) dudit élément de transmission (22) est positionnée et courbée sous la ligne horizontale entre l'alésage (23) de fixation de l'arbre de manivelle et le point de connexion (C) connectant ia première partie (22a) et la seconde partie (22b) de l'élément de transmission (22), en une position où l'alésage (21) de fixation de l'axe de pédale est positionné verticalement au-dessus de l'alésage (23) de fixation de l'arbre de manivelle, et
par le fait que ladite première partie (22a) dudit élément de transmission (22) a une pluralité de fentes (28) espacées longitudinalement, percées en profondeur dans une direction perpendiculaire au plan défini par la première et la seconde partie de la manivelle (20), de façon à augmenter la flexibilité de ladite première partie (22a) pour la flexion dans ledit plan.

2. Manivelle (20) pour une bicyclette, selon la revendication 1, caractérisée par le fait que ladite seconde partie (22b) dudit élément de transmission (22) a les mêmes fentes que les fentes (28) percées dans ladite première partie (22a) dudit élément de transmission (22).

3. Manivelle (20) pour une bicyclette, selon l'une quelconque des revendications 1 et 2, caractérisée par le fait que ledit angle de décalage θ a un degré entre 3° et 54°.

4. Manivelle (20) pour une bicyclette, selon l'une quelconque des revendications 1 à 3, caractérisée par le fait que, dans la région de la base de ladite seconde partie (22b) dudit élément de transmission (22), ladite base étant dans la position située autour dudit alésage (23) de fixation de l'arbre de manivelle pour ladite manivelle (20), une fente (S) et une projection (29) pour favoriser et limiter la déformation de ladite seconde partie (22b) dudit élément de transmission (22) est formée.
